# EUROPEAN PATENT APPLICATION

(11) **EP 4 722 472 A1**
(43) Date of publication of application: **08.04.2026**
(21) Application number: 24205001.1
(22) Date of filing: 07.10.2024
(51) Int. Cl.: E04G 21/16, B66C 19/00, B62B 1/18, B62B 3/04, B62B 1/06

(54) **DEVICE FOR MOVING AND LAYING OF SHEET LIKE BUILDING BLOCKS**

(71) Applicant: Hallgren, Martin, 843 96 Gällö (SE)
(72) Inventor: Hallgren, Martin, 843 96 Gällö (SE)
(74) Representative: AWA Sweden AB

(57) **Abstract**

There is provided a device (100) for carrying and positioning at least one sheet-like building block (5). The device is arranged having a supporting frame (110) and wheels (115, 115') in a wheel support structure (117) arranged to align said pair of wheels to rotate around a common axis (116). The device has an arm (120) for steering the device, and a coupling mechanism (130) for releasably connecting to the building block and for providing a vertical adjustment in relation to the frame of a building block if connected to the coupling mechanism.

## Description

### FIELD OF THE INVENTION

The present invention relates generally to a device for moving and laying of sheet like building blocks like reinforcement nets.

### BACKGROUND OF THE INVENTION

Sheet-like building materials used on construction sites are often manually distributed after arriving in stacked piles or packets, requiring several workers to place them in the correct locations. Examples of such materials used for flooring, ceilings, walls, and roofing include ground plates, plywood sheets, gypsum boards, insulation boards (such as foam boards or fiberglass panels), roofing felt, vapor barriers (such as plastic or foil sheets to prevent moisture penetration), underlayment sheets, concrete formwork panels, and reinforcement nets.

Standard reinforcing mats used in the building industry typically measure 2.5 meters by 6.0 meters, with matrix gaps of 150 mm. Manufacturers usually deliver these mats in stacks near the intended site of use. Each mat must then be individually transported from the stack to its designated location and oriented correctly. Traditionally, this process is done manually, especially when pouring concrete floors in existing buildings or structures where the roof and walls are completed before the floor. This is common practice because the quality of the concrete pour improves when it is protected from rain and other elements. Lifting a mat from the stack, carrying it, and aligning it is a labour-intensive task, often requiring four workers to lift each mat, transport it to the desired location, position it accurately, and then return to the stack for the next mat. This method is physically demanding and time-consuming, especially when laying the floor in a large factory hall. The mats must be moved over long distances and precisely aligned so that each mat overlaps the adjacent ones along the edges.

NL Patent No. NL1017891 C1 discloses a wheeled trolley with a carrier frame to simplify manual handling when positioning reinforcement mats. This trolley comprises a carrier frame mounted on a turntable arranged above a wheeled support. Two men can lift the mat onto the trolley, move it to the intended position, align it, and then lift it off and into place. The system described above is generally effective in improving the transport and alignment of reinforcement mats, reducing the number of people needed to perform the work. However, there is a need for a more controlled and efficient method to manually transport and align sheet like building blocks like reinforcement mats.

### SUMMARY OF THE INVENTION

It is an object of the present invention to at least provide an alternative and improved device for moving and laying of sheet like building blocks. It would be advantageous to achieve a device for moving and laying of sheet like building blocks which removes the need for the user to lift the building block by hand thereby decreasing the working load. This object is achieved by the device to the present invention as defined in the appended independent claim. Preferred embodiments are set forth in the dependent claims and in the following description and drawings.

Thus, in accordance with the present inventive concept, a first aspect of the invention a device for carrying and positioning at least one sheet-like building block is presented that comprises a supporting frame, at least one pair of wheels, at least one wheel support structure arranged to align the pair of wheels to rotate around a common axis, and to which wheel support structure the support frame is connected, an elongated arm for steering the device, and a coupling mechanism for releasably connecting to the building block and for providing a vertical adjustment thereof in relation to the frame of a building block if connected to the coupling mechanism. This advantageously provides a vehicle to which the user can couple the sheet-like building blocks and adjust their vertical position, lifting them off the ground or from the stack. Instead of carrying them to the preferred position, the user can use the device to transport the building block, use the vehicle to align the building block, and then adjust its vertical position the opposite way, i.e. in a controlled manner lowering the building block to place in the correct position. The device may have a support leg or a third wheel located near an outer end of the arm.

According to an embodiment of the device, the coupling mechanism comprises one or more coupling devices which are distributed and suspended from corresponding suspension points arranged on the frame, thereby providing a well balanced coupling of the sheet like building block which is advantageous.

According to an embodiment of the device, the coupling devices are suspended movably from the suspension points of the frame, e.g., by being suspended in a wire such that the suspension and coupling device is not rigid in relation to the building block, which provides a flexible way for the user to adjust the exact point where the coupling device is to be attached.

According to an embodiment of the device, the coupling mechanism further comprises a control device for controlling the vertical adjustment of the building block. The control device may be arranged on the arm that controls the movement of the device, allowing the user to operate the vertical adjustment of the building block from a distance away from the load. The control device may be manually driven and controlled, or be electrically driven and controlled, e.g. by means of one or more electrical motors for driving vertical movement of each coupling device. The control device can be provided with versatile control options, e.g., operation of the coupling mechanism via a user interface, a dedicated mobile app, or a remote control, among other methods.

According to an embodiment of the device, the coupling mechanism comprises a branched wire system comprising a plurality of wires. The wires may be branched out from a main path along the vehicle at predetermined positions. Optionally the branched wire system is formed along a main wire to which e.g., pairs of branch wires are attached. The wire system is supported by fastening devices, such as hooks, loops, U-nails, etc., which guide the wire while allowing it to run freely through them. These fastening devices may be referred to as running points herein. The fastening devices may be arranged on the frame and the arm. Each coupling device is connected via a respective branch wire. This advantageously provides an inexpensive, flexible system that is efficient for lifting, e.g., reinforcement mats, where the coupling devices are typically connected to the grid. The wire system may comprise a main wire from which branch wires are branched at one or more positions.

According to an embodiment of the device, the control device is a winch to which the coupling mechanism is connected, which is advantageous for controlling the lifting of the building block by means of, e.g., a wire system. When using a wire system which is controlled by the winch, the winch may be located at the outer end of the arm, e.g., near the handle. The wire system may be connected to the winch drum which may pull in (wind up) or let out (wind out) of the main wire, and the coupling devices are thereby raised or lowered using a crank handle, or by activating a motor which winds the wire onto the winch drum. A winch brake may secure the wire in place.

According to an embodiment of the device, the wheel support structure for each wheel pair comprises one or more of: a solid axis with hubs, such as a beam axle or straight axle, to which the wheel pair and the frame are connected, a respective wheel support in which each wheel is suspended, and at least one interconnecting beam interconnecting the wheel supports and/or connecting the wheel supports to the frame, and a respective frame height adjusting element for adjusting or selecting a height of the frame over ground. The wheel support may be a rigid wheel suspension or a damped wheel suspension and may include a respective wheel hub which are aligned to provide the common axis of the wheels.

According to an embodiment of the device, the frame height adjusting is provided by at least one of: selecting a radius of the wheels to provide a preferred working height of the frame, and at least one respective spacer is arranged on the wheel support and connecting to the at least one interconnecting beam or directly to the frame. The spacer may be arranged such that the common axis of the wheels is below the frame. The common axis may be a geometrical common axis of the wheels.

The preferred working height of the frame is selected to allow for the vertical adjustment of a building block when connected to the coupling mechanism and may be adapted e.g., to the typical height of a stack of building blocks such that the device can be positioned over the stack, the coupling mechanism be activated for releasably connecting to one or more of the top building blocks and for providing a vertical adjustment of the coupled building block(s) in relation to the frame, thereby providing a cleared space before using the device to carry and transport the connected building blocks to a preferred position where it is aligned and lowered into position by means of the coupling mechanism.

According to an embodiment of the device, the at least one spacer comprises one or more interconnected spacer portions that form a shape of a rectangle, a square, a U-shape, a half circle, and a V-shape. The spacer may it self be formed in the shape of for example a rectangle, a square, a U-shape, a half circle, and a V-shape. Other shapes are conceivable.

According to an embodiment of the device, the spacer comprises two spacer portions which may be elongated and are pivotably connected at one end. Each opposite other end of the two spacer portions are connected to the at least one interconnecting beams or optionally directly to the frame. An angle between the pivotable spacer portions can thus be adjusted before fixating (rigidly or pivotably) the opposite ends of the respective spacer portions to the interconnection beams or to the frame, thereby allowing different working heights of the device.

According to an embodiment of the device, it further comprises a front height adjusting portion, which may be arranged at said arm. The front adjusting portion may consist of the support leg or be comprised in the support leg or in connection with the third wheel.

According to an embodiment of the device, the inter distance of the wheels is selected to be wider than the width of the frame, which is advantageous. The material used in the arm and the frame may be wood, aluminium, steel, titanium, carbon fibres, glass fibres, composite materials or any other suitable material. Further, the coupling devices may be hooks, carabiners, magnets, clamping devices, or any other applicable coupling device suitable for releasably connecting to one or more building blocks.

In a second aspect of the invention, there is provided a device assembly for building a device according to the current inventive concept as described herein, which can be assembled and disassembled. The device assembly comprises prefabricated beams for building the frame, a prefabricated beam for providing the arm, a demountable support leg or a third wheel for connecting to the arm, a pair of demountable wheels connectable by means of a rigid axis which is further connectable to the frame, or by means of individual wheel supports which further are connectable to the frame. The assembly further comprises prefabricated beams for building the wheel supports and connecting them to the frame, and a coupling mechanism for releasably connecting to the building block.

According to an embodiment of the device assembly, the prefabricated beams for building the frames, and the arm are provided with prepared suspension points and running points for the coupling mechanism when being a branched wire system, and wherein the branched wire system is prepared with coupling devices connected to each branch for connecting to a building block.

These and other aspects, features, and advantages of the invention will be apparent from and elucidated with reference to the embodiments described hereinafter.

### BRIEF DESCRIPTION OF THE DRAWINGS

The invention will now be described in more detail and with reference to the appended drawings in which:
Figure 1a is a schematic perspective view illustrating an exemplifying embodiment of a device according to the present inventive concept when carrying a building block;
Figure 1b is a schematic perspective view illustrating an exemplifying embodiment of a device according to the present inventive concept when not carrying a building block;
Figure 2 is a schematic perspective view illustrating an exemplifying embodiment of a device according to the present inventive concept;
Figure 3 is a schematic perspective view illustrating an exemplifying embodiment of a device according to the present inventive concept;
Figures 4a - 4c are schematic side views illustrating different example embodiments of height adjusting elements according to the present inventive concept;
Figure 5 is a schematic perspective view illustrating a front height adjusting portion according to an embodiment of a device according to the present invention; and
Figures 6a and 6b are schematic perspective views illustrating details of an embodiment of a device according to the present inventive concept.

### DESCRIPTION OF PREFERRED EMBODIMENTS

The present invention will now be described more fully hereinafter with reference to the accompanying drawings. The below embodiments are provided by way of example so that this disclosure will be thorough and complete, and will fully convey the scope of the invention to those skilled in the art. Like numbers refer to like elements throughout.

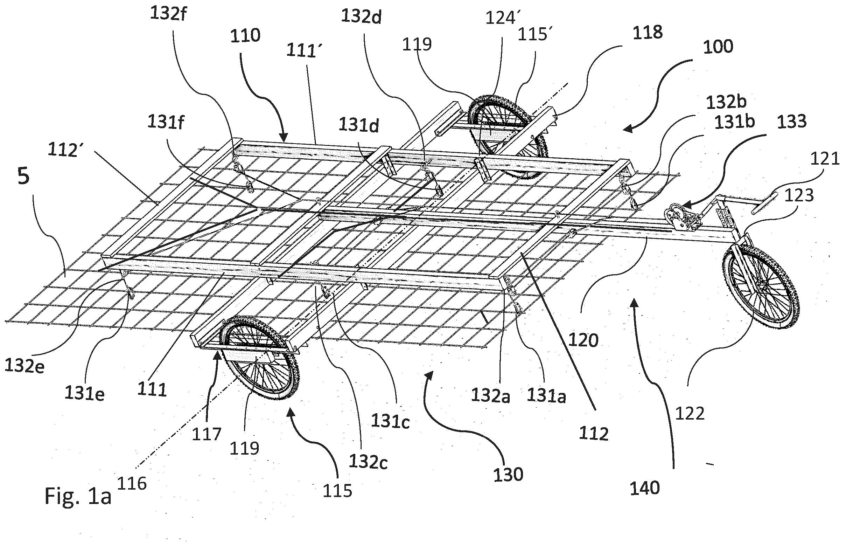

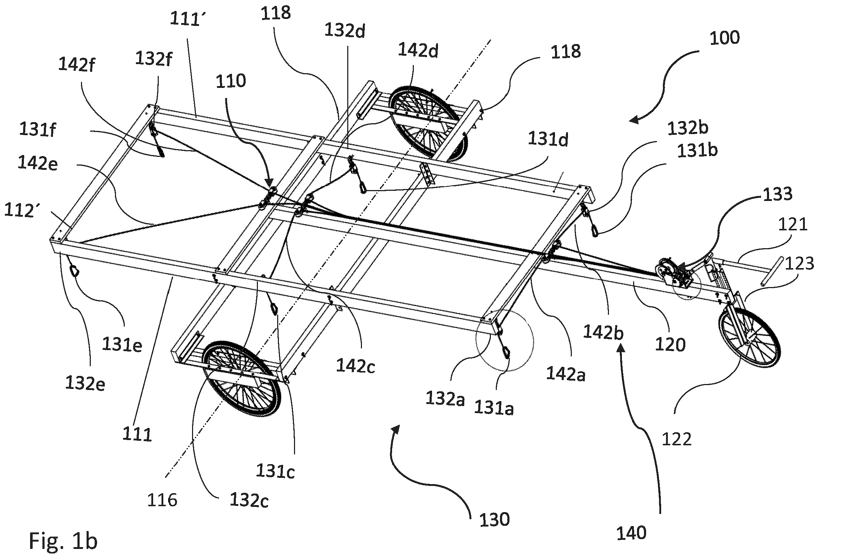

Figures 1a and 1b depicts a schematic representation of an exemplary embodiment of a device 100 designed for transporting and positioning at least one sheet-like building block. In the exemplary embodiment, the device 100 is shown realisably coupling to and carrying a building block in the form of a reinforcement net 5.

The device comprises a supporting frame 110 which is constructed using two parallel side beams 111, 111, which are positioned longitudinally in relation to the intended driving direction of the device 100. A front beam 112 which is arranged perpendicularly in relation to the side beams interconnects front ends of the side beam 111, 111'. and a rear beam 112' is similarly connected perpendicularly to rear ends of the side beams 111, 111'. The illustrated frame 110 in Figures 1a and 1b is a square (of beams) wooden structure which is substantially horizontally arranged. The frame 110 is connected to a pair of wheels 115, 115' which are mounted in individual wheel support structures 117, 117', and aligned to rotate around a common axis 116.

A coupling mechanism 130 for releasably connecting to the building block 5 and for providing a vertical adjustment in relation to the frame 110 of the building block when connected to the coupling mechanism 130 is connected to the frame.

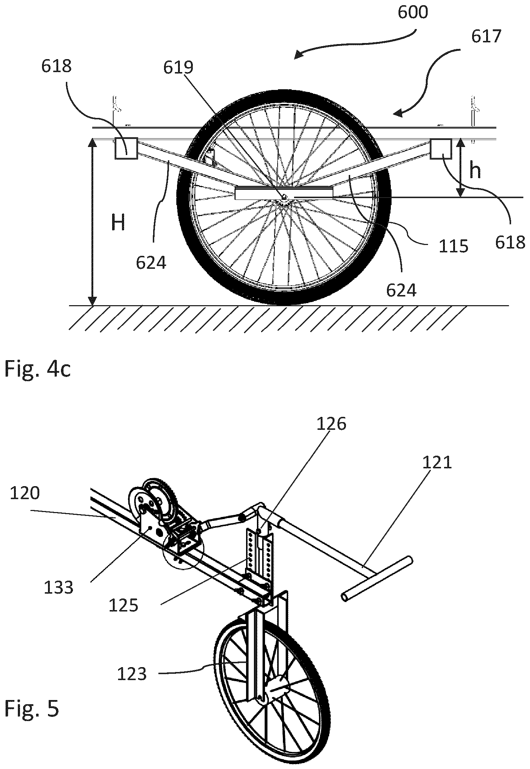

An elongated arm 120 for steering the device is connected to the frame 110, arranged perpendicular to the common axis 116, and extending longitudinally in relation to the intended driving direction of the device 100, preferably along a longitudinal central axis of the frame. The arm 120 extends a distance from the frame in the driving direction. At the outer end of the arm 120, a third wheel 122 is arranged to provide the user with control over the direction and movement of the device 100. The front wheel 122 may be mounted using a fork 123 or a similar mechanism that permits rotation and steering, which is connected to a stem. The third wheel 122 is preferably arranged to be pivotable about a vertical axis and may further be connected to a handlebar 121, as illustrated in Figures 1a and 5. The handlebar is connected to a swivel wheel fork 123 in which the front wheel is here mounted. The handlebar is attached to a stem, which in turn is attached to the fork 123. This arrangement allows the front wheel to turn when the user turns the handlebar, enabling steering of the device.

Alternatively, if the frame is made longer in the driving direction the arm does not need to be extending forward or can be left out, and the handle bar and third wheel may then be then arranged on the frame. An extended arm is however preferred as this provides better space for the workers to couple the load.

A height of the handlebar 121 may be adjustably arranged to accommodate different user preferences and ergonomic requirements. A height of the connection of the wheel 123 to the arm 120 (or in the alternative option above, to the frame) may be adjustably arranged to accommodate different preferred working heights of the frame. An example of the arm and front wheel- and handle bar height adjustment mechanism is shown in more detail in Figure 5.

As illustrated in Figure 5, a front height adjusting portion 125 may be arranged at said arm 120. The front height adjusting portion is here a bracket 125 with holes at various heights used to secure the arm at different heights. The height of the arm 120 is thus adjustable. The height of the handle may also be adjustably arranged. Other ways of adjusting the height of the fastening of the arm on the front support are conceivable.

With reference again to Figure 1a, the wheels 115, 115'may be aligned parallel to the side beams 111, 111' and are preferably positioned on the outer side of the frame 110 to provide the workers with ample space for connecting a coupling mechanism 130 to the reinforcement mat 5. The inter distance of the wheels 115, 115' is preferably selected to be at least larger than the size of the width of the building blocks, here reinforcement net 5, to enable the device to be positioned above a reinforcement net on the ground or in a stack of reinforcement nets. A height of a stack of reinforcement nets may initially be for example about 60 cm. To place the device over the stack, the height of the frame must then have a working height that exceeds 60 cm.

Each wheel support structure 117, 117'comprises a couple of interspaced support portions 119, 119' between which each wheel 115, 115' is suspended in a wheel hub (not visible in the figures) about which the wheels rotate. On top of the support portions 119, 119 corresponding brackets 124, 124' may be coupled. Alternatively, arranging the wheel hub in a single support portion is conceivable. The two wheel support structures 117 and 117' are further attached to two parallel interconnection beams 118, 118', one at each end portion of the two parallel interconnected beams 118, 118'. The interconnection beams 118, 118'may be attached to the support portions 119, 119'and/or the brackets 124, 124.

In the shown example, the wheel supports and the interconnecting beams form a rectangular unit which is advantageous to provide a stable construction onto which the frame can be attached, see mountable system as described herein. The two parallel interconnected beams 118, 118' may thus further support and connect to the frame 110, which is arranged on top interconnection beams 118, 118', thereby at least indirectly connecting the wheels 115, 115' to the frame 110. Directly connecting the wheel support structures (i.e., there is no physical beam directly connecting the wheel support structures) to the frame is conceivable and depends on the structure of the wheel support structure/frame structure. The wheel support structure 117, 117' in Figures 1a and 1b is arranged to align the pair of wheels 115, 155 to rotate around the common axis 116.

In alternative embodiments, the wheel pair is interconnected by means of a solid axis with hubs to which the wheel pair and the frame are connected. Optionally a solid axis, a solid axis and wheel supports, in combination with least one interconnecting beam is conceivable.

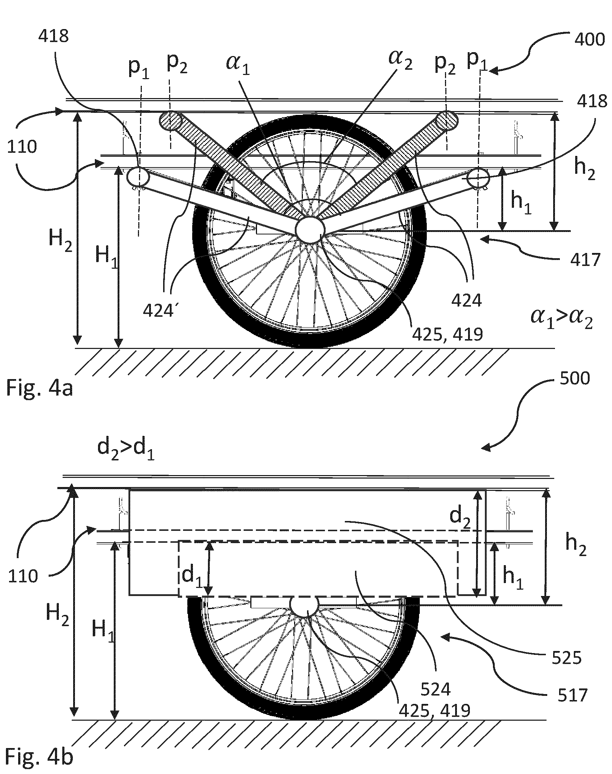

According to embodiments of the inventive concept, the wheel support structures further comprises a respective frame height adjusting element for adjusting or selecting a height of the frame over ground, which will be further elaborated with reference to Figures 4a - 4c below.

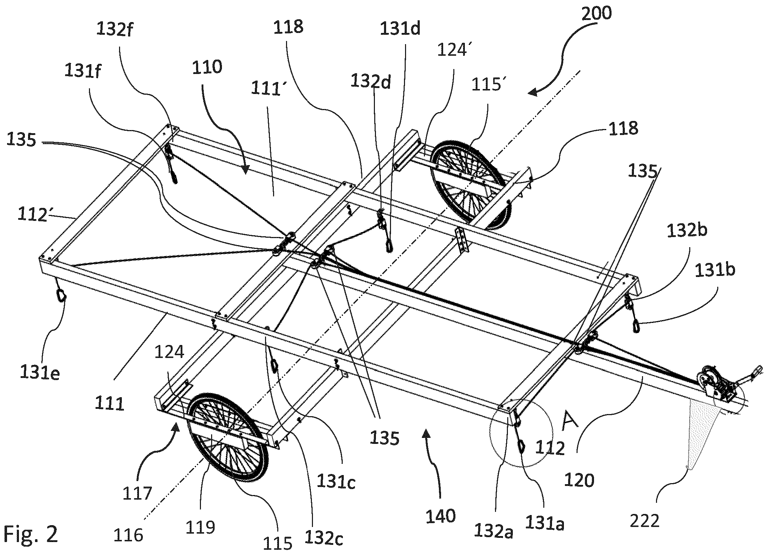

Referring now to Figure 2, a device 200 according to the current inventive concept is disclosed which shows a similar structure as the device 100 (like numbers refers to like elements). In device 200 instead of arranging a third wheel at the free end of arm 120, the device is levelled (or nearly levelled) using a support leg 222. The device is lifted in the arm when the device is to be moved. The support leg may be exchangeable or adjustable in height to enable levelling when arranging the device to have different working heights.

As mentioned in relation to Figures 1a and 1b, there is provided a coupling mechanism 130 for releasably connecting to the building block 5 and for providing a vertical adjustment in relation to the frame 110 of the building block when connected to the coupling mechanism 120 is connected to the frame. As also illustrated in Figure 2, the coupling mechanism 130 comprises a number of coupling devices 131a-131f which are distributed over the frame 110. Here six coupling devices 131a-131f are evenly distributed along the two side beams 111, 111', at the front end, at the middle and at the rear portions thereof. The coupling devices 131a-131f are suspended from the frame in corresponding suspension points 132a-132f arranged on the frame 110 by means of a wire system 140, which is described below.

The coupling mechanism 130 is designed to allow vertical lifting of a connected building block. This means that the height position of the connected building block is adjustable when attached to the coupling mechanism. Additionally, the frame is positioned at a height that permits vertical adjustment and transport of the building block when connected to the coupling mechanism.

The coupling devices 131a-131f may be suspended movably from the suspension points 132a-132f, e.g., by means of wires. This is advantageous when coupling to e.g. reinforcement mats as this allow for the worker to connect to the net at slightly different positions. A rigid suspension may be conceivable.

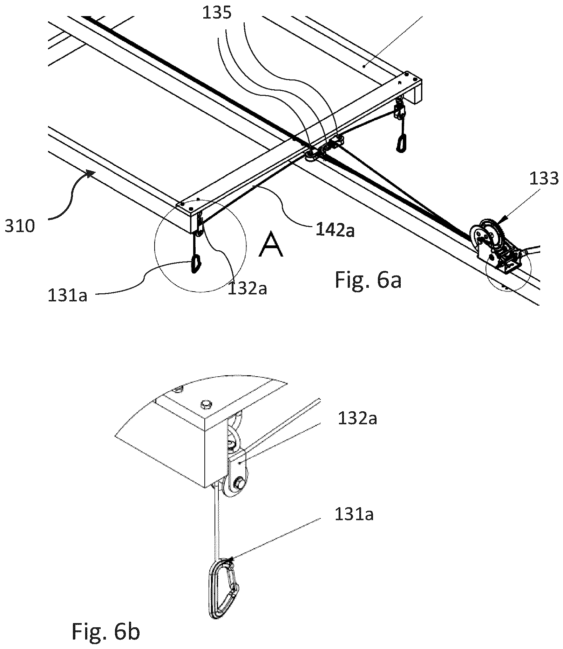

In Figures 6a and 6b, a suspension point 132a, in the form of a cheek block, is shown in greater detail. It is mounted on the underside of a frame 310, as depicted in Figure 1b, to guide a respective branch wire. This arrangement allows the coupling device 131a to hang below the frame and be connected to the reinforcement mat. In Figure 6a, three running points 135 are depicted: two cheek blocks attached to a loop. The branch wire 142a runs from the winch 133 via one of the check blocks to connection point 132a and coupling device 131a is then attached at the outer end thereof. Other arrangements of the running points and the connection points are conceivable.

With reference now to Figure 1b, the wire system 140 in this exemplifying embodiment is formed by means of six branch wires 142a-142f which are here guided along a main path along a central axis in the longitudinal direction of the vehicle, i.,e, here along the steering arm 120 and the frame 110, using common loops, trapezoidal hooks, or similar mechanisms as running points through which the wires run. At preselected positions, each of the branch wires 142a-142f is deflected via a running point 135 and guided to reach a suspension points 132a-132f using loops, trapezoidal hooks, or similar mechanisms, optionally by means of one or more further supporting running points. They are further suspended at their respective suspension points 132a-132f, e.g., by means cheek blocks, loops or some similar mechanism. A respective coupling device 131a-131f is arranged in an outer end of each respective. The coupling devices 131a-131f are here carabiniers.

It is conceivable that the wire system is implemented using a main wire arranged along the main path along the central axis in the longitudinal direction of the vehicle to which branched wires pairs are attached, e.g., at different distances and guided along the centre of the device, e.g., along the arm 120 and the frame 110, using common loops, trapezoidal hooks, or similar mechanisms as running points 135. At preselected positions, the branch wires are deflected from a running point and guided to reach the suspension points 132a-132f using loops, trapezoidal hooks, or similar mechanisms, optionally by means of one or more further supporting running points. Further, other numbers of wire branches, positioning of running points to guide the wiring and of the wire system are conceivable. The guiding of the wires along a centred main path is optional.

In the exemplifying embodiment, two branch wires connected to coupling devices 131a and 131b are deflected at running points arranged at the front beam 112 and guided to the suspension points 132a and 132b, respectively, see also Fig. 6a. Two branch wires connected to coupling devices 131c and 131d are deflected at running points arranged on the middle of the frame, at the front interconnecting beam 118and guided to the suspension points 132c and 132d, respectively. The remaining two branch wires connected to coupling devices 131e and 131f are deflected at running points arranged at interconnecting beam 118', and guided to the suspension points 132e and 132f, respectively. The positioning of the running points may be selected differently and may depend on the structure of the frame, the selected length of the wires in the wire system etc..

By guiding the branch wires, or optionally a main wire and branch wires, 142a-142f through loops and cheek blocks, and connecting them in a first end, or via the main wire, to a winch 133, operating the winch to roll up or release the main wire will raise or lower the respective coupling devices. The wire system may be designed such that the distance from the winch of the first loops correspond to at least the intended working height, thereby allowing the winch to roll up that amount of the main wire.

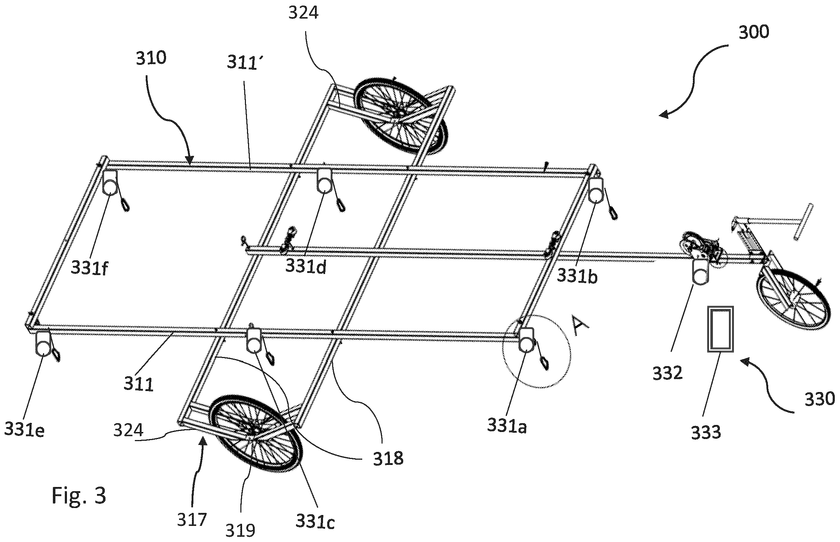

With reference now to Figure 3, a device 300 according to the inventive concept is illustrated which has a frame structure 310 constructed by means of metal beams which here are hollow beams made of e.g. aluminium. Other beams such as I-beams, universal beams etc. are conceivable. In this embodiment of the device 300, a coupling mechanism 330 for the vertical adjustment of the building block is arranged by means of coupling devices 331a-331f which are distributed on the frame, and which comprises individual motor driven winches, which are controlled by a remote control or app 333. The worker may then use the remote control or app 333 to activate the motor driven winches 331a-333f to lower the coupling devices over a building block, connect the coupling devices to the building block, and the activate the motor driven winches to lift the building block. Thereby the work load is reduced for the worker when raising or lowering the building block.

Alternatively, when having a branched wire system 140 as described previously with reference to Figures 1a and 1b and 2, such a remote control of the coupling mechanism 330 may be configured to control, via a remote or app 333, a motor-driven winch 332 arranged on the arm. The branch wires or the main wire are then connected to this winch and 332 and can be wound or unwound as needed. The worker may then use the remote control or app 333 to activate the motor driven winch 332 to lower the coupling devices over a building block, connect the coupling devices to the building block, and the activate the motor driven winch to lift the building block. Thereby the work load is reduced for the worker when raising or lowering the building block.

A remote controlled steering of the coupling mechanism may require a remote control system including a transmitter and receiver unit, where a respective receiver and/or transceiver unit may be connected to the winch motor, together with sensors for controlling at least height adjustments etc.. The motors may be powered by means of a battery. The control system may further comprise software to control an app or a remote control.

Figure 4a depicts a schematic principle side view of a frame height adjusting functionality/element according to an exemplary embodiment of a device 400. A wheel support 417 which comprises a wheel hub 425 about which the wheel rotates, and which wheel support 417 is attached to a couple of interconnecting beams 418, 418 by means of two spacer portions 424, 424' which are pivotably connected at one end at the hub. The opposite end portions of the spacer portions 424,424' are connected to the interconnecting beams 418,418' which may be used to support the frame 110 as previously discussed.

Consider in a first scenario illustrated with the white representation of the spacer portions 424, 424', where the spacer portions 424, 424'are angled a first angle α₁, and a second scenario illustrated with a dashed representation of the spacer portions 424, 424', where the spacer portions 424, 424'are angled a second angle α₂, where α₁ > α₂. In the first scenario, the interconnecting beams 418, 418 support the frame 110 at a first position p₁. In the second scenario, the interconnecting beams 418, 418 support the frame 110 at a second position p₂. When α₁ > α₂ the wider inter distance between the support points p₁ then the support points p₂ this results in a lower working height H₁ of the device in the first scenario than in the second scenario which results in a higher working height H₂.

Figure 4b depicts a schematic principle side view of a frame height adjusting functionality/element according to an exemplary embodiment of a device 500. The device 500 comprises a wheel support 517 which comprises a wheel hub 425 about which the wheel rotates. The wheel support 517 is attached directly to the frame 110 by means of a spacer portion 525 of a height d which is attached at the hub 425, e.g. by means of a bracket. In a first scenario, a spacer portion 525 of a first height d₁ is selected to support the frame 110. In a second scenario, a spacer portion 525 of a second height d₂ is selected to support the frame 110. When d₁ < d₂ this results in a lower working height H₁ of the device in the first scenario than in the second scenario which this results in a higher working height H₂ of the device.

Figure 4c depicts a schematic principle side view of a frame height adjusting functionality/element according to an exemplary embodiment of a device 600. The device 600 comprises a wheel support which comprises a wheel hub 619 about which the wheel rotates. The wheel support is attached to a couple of interconnecting beams 618, 618 by means of two spacer portions 624, 624 which are fixated interconnecting beams 618, 618 thereby providing a working height H for the device.

Some of the depicted examples herein are substantially V-shaped. Other shapes are conceivable such as rectangle, a square, a U-shaped, a half circled etc.

According to an embodiment of the device, a preferred working height of the frame is achieved by a large radius of the wheels.

According to an embodiment of the device, the spacing portions in the examples shown in Figures 4a - 4c are arranged on an inner side of the wheel or an outer side of the wheel.

According to an embodiment of the device, it is conceivable that the spacing portions in the examples shown in Figure 4a - 4c are arranged connecting to said at least one interconnecting beam or directly to the frame. The spacers are preferably arranged such that the common axis, which may be a geometrical axis, of the wheels is suspended below the frame.

According to an aspect of the inventive concept, there is provided a device assembly for building a device in all its possible embodiments as described above, which an be assembled and disassembled. To be able to quickly mount a device to assist with positioning of sheet like building blocks at the working construction site according to any preceding claim which can be assembled and disassembled, the device assembly comprises at least prefabricated beams of suitable material for building the frame, a prefabricated beam for providing the arm, a demountable support leg or a third wheel for connecting to said arm. Optionally the support leg or the third wheel may be preconnected to the arm. The assembly further comprises a pair of wheels in demountable wheels supports (optionally with a rigid axis which is connectable to the frame, or with prefabricated interconnecting beams to provide a wheel supports structure which is connectable to the frame). Optionally the wheel support structure is prefabricated such that the frame can be mounted on top of it. The wheel supports may have the wheels pre-mounted. The wheel supports may be pre-interconnected by means of interconnecting beams. The assembly may further comprise prefabricated beams for building said wheel supports. The device assembly further comprises a coupling mechanism for releasably connecting to the building block.

According to embodiments of the inventive concept of providing a device assembly, the prefabricated beams for building the frames and the arm are provided with prepared suspension points and running points for the coupling mechanism when being a branched wire system. The branched wire system may be prepared with coupling devices connected to each branch for connecting to a building block.

In the shown examples herein, the supporting frame is shown as a rectangular frame structure comprising parallel side beams, a front beam, and a rear beam. The frame is designed to provide a simple, robust and stable support for various applications. Other shapes or structures are conceivable for the inventive concept. As an example, the front and the rear beam may be left out, etc. An important aspect of the frame is to cover an area similar to the building block to be lifted, or more specifically, to achieve an even weight distribution and structural stability when coupling to the one or more building blocks. The suspension points on the frame should thus reach suitable connection points on the building block to which the coupling mechanism can be lowered from the frame and attach to the building block while balancing and distributing the load.

Connections between the beams, wheel supports, arm etc. may be secured by using welding, bolts, nails, rivets or other suitable fastening methods depending on the material used to construct the device to ensure structural integrity.

Although the exemplifying examples described herein are directed to carrying reinforcement nets, the inventive concept is suitable for several kind of sheet like building blocks, such as plywood sheets, gypsum boards, insulation boards such as foam boards or fiberglass panels, roofing felt, vapor barriers such as plastic or foil sheets used to prevent moisture from penetrating walls and floors, underlayment sheets, and concrete formwork nels.

The term "wire" as used herein refers to systems for lifting and suspending items. The terms "wire" and "wire ropes" are used interchangeably and can refer to lines, ropes, cords, thin chains etc..

In the exemplifying embodiments the coupling mechanism is embodied by having six coupling devices which are distributed and suspended from corresponding suspension points arranged along the side beams, in the front of the frame, the back of the frame and on the middle of the frame, and on an underside thereof, of the frame. However, other numbers of coupling devices than in the shown example are conceivable. Further, the suspension points may be arranged in alternative positions on the frame, e.g., on other positions on the frame and not necessarily on an underside of the beams of the frame. For instance, the suspension points may be arranged on a side of the beams of the frame.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A device (100, 200, 300, 400) for carrying and positioning at least one sheet-like building block, comprising:
a supporting frame (110);
at least one pair of wheels (115, 115');
at least one wheel support structure (117, 317, 417) arranged to
align said pair of wheels to rotate around a common axis (116), and to which wheel support structure said frame is connected;
an arm (120) for steering the device; and
a coupling mechanism (130) for releasably connecting to the building block and for providing a vertical adjustment in relation to said frame of a building block if connected to the coupling mechanism.

2. A device according to claim 1, wherein said coupling mechanism (130) comprises one or more coupling devices (131a-131f) which are distributed and suspended from corresponding suspension points (132a-132f) arranged on the frame (110).

3. A device according to claim 2, wherein the coupling devices (131a-131f) are suspended movably from the suspension points of the frame (110).

4. A device according to any preceding claim, wherein the coupling mechanism (130) further comprises a control device (133) for controlling the vertical adjustment of the building block.

5. A device according to any preceding claim, wherein the coupling mechanism (130) comprises a branched wire system (140) comprising branch wires, wherein said wire system (140) is supported by running points arranged on the frame (110), wherein each coupling device (131a-131f) is connected via a respective branch wire (142a-143f).

6. A device according to claim 5, when depending on claim 4, wherein said control device comprises a winch (133).

7. A device (100, 200, 300) according to any preceding claim, wherein said wheel support structure (117, 117', 417, 517, 317) for each wheel pair comprises one or more of:
a solid axis with hubs to which said wheel pair and said frame are connected;
a respective wheel support (119, 319, 419, 619 ) in which each wheel is suspended, and at least one interconnecting beam (118, 318, 418) interconnecting said wheel supports and/or connecting said wheel supports to said frame; and
a respective frame height adjusting element (324, 424, 524, 525, 624) for adjusting or selecting a height of the frame over ground.

8. A device according to claim 7, wherein said frame height adjusting element is provided by at least one of:
selecting a radius of said wheels to provide a preferred working height of the frame; and
at least one respective spacer is arranged on said wheel support and connecting to said at least one interconnecting beam or directly to the frame, wherein said spacer is arranged such that the common axis of the wheels is suspended below said frame.

9. A device according to claim 8, wherein said at least one spacer comprises one or more spacer portions that form a shape of a rectangle, a square, a U-shape, a half circle, and a V-shape.

10. A device according to claim 8 or 9, wherein said spacer comprises two spacer portions (424) which are pivotably connected at one end, and wherein each opposite other end of the two spacer portions are connected to said at least one interconnecting beams or directly to the frame.

11. A device according to any preceding claim, wherein the inter distance of the wheels is selected to be wider than the width of the frame.

12. A device according to any preceding claim, further comprising a front height adjusting portion (125).

13. A device assembly for building a device according to any preceding claim which can be assembled and disassembled, said device assembly comprising:
prefabricated beams for building said frame;
a prefabricated beam for providing said arm;
a demountable support leg or a third wheel for connecting to said arm;
a pair of demountable wheels connectable by means of a rigid axis which is
connectable to said frame, or by means of individual wheel supports, wherein said assembly further comprises prefabricated beams for building said wheel supports and connecting them to said frame; and
a coupling mechanism for releasably connecting to the building block.

14. A device assembly according to claim 14, wherein said prefabricated beams for building said frames, and said arm are provided with prepared suspension points and running points for said coupling mechanism when being a branched wire system, and wherein said branched wire system is prepared with coupling devices connected to each branch for connecting to a building block.
